(19)

Europäisches
Patentamt
European
Patent Office
Office européen
des brevets

(11) **EP 4 660 258 A1**

(12) **EUROPEAN PATENT APPLICATION**

(43) Date of publication:
**10.12.2025  Bulletin 2025/50**

(21) Application number: **24180248.7**

(22) Date of filing: **05.06.2024**

(51) International Patent Classification (IPC):
**C09D 5/02** *(2006.01)*

(52) Cooperative Patent Classification (CPC):
**C09D 5/024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Covestro LLC
Pittsburgh, PA 15205 (US)**
• **Covestro (Netherlands) B.V.
6167 RD Geleen (NL)**

(72) Inventors:
• **Haug, Karl
Medford, 02155 (US)**
• **Gordon, Zachary
Medford, 02155 (US)**
• **Scheerder, Jurgen
4116 BG Buren (NL)**

(74) Representative: **Levpat
c/o Covestro AG
Gebäude K12
51365 Leverkusen (DE)**

(54) **POLYMER DISPERSIONS FOR SCRUB AND STAIN RESISTANT WALL PAINT**

(57)     A waterborne dispersion of polymeric particles comprises two vinyl copolymers, each a reaction product of: (i) a vinyl monomer selected from the group consisting of styrene, diethyl itaconate, methyl(meth)acrylate, ethyl(meth)acrylate, propyl(meth)acrylate, butyl(meth) acrylate and mixtures thereof, (ii) a carboxylic acid functional vinyl monomer, (iii) a non-ionic hydrophilic vinyl monomer comprising at least one functional group selected from the group consisting of hydroxyl, ureido, epoxy, amide, carbamate, urea and nitrile, and (iv) a crosslinking monomer different from monomers (i) - (iii); wherein the second vinyl copolymer has a theoretical Tg of at least 30 °C higher than the Tg of the first vinyl copolymer. The vinyl copolymers comprise a limited amount of a C8 or higher ester monomer, and the dispersion comprises particles that comprise both of the vinyl copolymers.

EP 4 660 258 A1

## Description

The present invention relates to the field of polymer dispersions, specifically polymer dispersions that are added to paints or other coatings to impart scrub and stain resistance to the paint or coating. The present invention also relates to processes for preparing such waterborne dispersions.

Background

Paints and other coatings on surfaces subject to staining and abrasion have existed for a long time. However, the constituents inside those paints and coatings have evolved over time, as technology has created new materials, and the objectives of how those paints and coatings should perform have also evolved.

Stain resistance is an important quality of a paint or coating to preserve its appearance and texture, and not deteriorate over time. Furthermore, different substances can provide staining that is harder to remove than others. For example, stains from most foods and liquids are easily removed with typical household cleaning supplies, without damaging painted or coated surfaces. Then there are other substances which have the ability to leave lasting stains, and are not easily removed. Hydrophobic materials are one such group of substances, and include waxy substances such as lipstick, crayon and pencil. These substances leave a much more delible mark that is not easily removed. In addition, attempts to remove such marks often involve scrubbing, which itself can damage or remove a paint or coating from the surface to which it was applied.

In addition, there exists continuing regulations to reduce volatile organic compounds (VOCs) that historically have been present in paints and coating. This has also resulted in changing paint and coating compositions, and often times the properties associated with those paints and coatings have deteriorated.

It is especially difficult to achieve high levels of stain resistance against hydrophobic materials while maintaining scrub resistance. While high levels of strong acid monomers allows for increased stain resistance against hydrophobic materials, there is typically a corresponding loss of scrub resistance. While high performance paints will attempt at achieving strong performances in multiple properties, there remains a need to achieve high performance in every key property simultaneously. Namely, there exists a need for a wall paint or coating that exhibits both scrub and stain resistance against hydrophobic materials, while at the same time releases a minimum amount of VOCs.

Summary of the Invention

A waterborne dispersion of polymeric particles comprises (A) a first vinyl copolymer having a theoretical Tg of -10 to 25 °C, preferably -5 to 25 °C, most preferably 0 to 25 °C, which is a reaction product of: (i) a vinyl monomer selected from the group consisting of styrene, diethyl itaconate, methyl(meth)acrylate, ethyl(meth)acrylate, propyl(meth)acrylate, butyl(meth)acrylate and mixtures thereof, (ii) a carboxylic acid functional vinyl monomer, (iii) a non-ionic hydrophilic vinyl monomer comprising at least one functional group selected from the group consisting of hydroxyl, ureido, epoxy, amide, carbamate, urea and nitrile, and (iv) a crosslinking monomer different from monomers (i) - (iii); (B) a second vinyl copolymer having a theoretical Tg of at least 30 °C higher than the Tg of the first vinyl copolymer, which is a reaction product of: (i) a vinyl monomer selected from the group consisting of styrene, diethyl itaconate, methyl(meth)acrylate, ethyl(meth) acrylate, propyl(meth)acrylate, butyl(meth)acrylate and mixtures thereof, (ii) a carboxylic acid functional vinyl monomer, (iii) a non-ionic hydrophilic vinyl monomer comprising at least one functional group selected from the group consisting of hydroxyl, ureido, epoxy, amide, carbamate, urea and nitrile, and (iv) a crosslinking monomer different from monomers (i) - (iii); and (C) a carrier medium; wherein the first vinyl copolymer comprises less than 40 wt. %, preferably less than 30 wt. %, more preferably less than 20 wt. %, more preferably less than 10 wt. %, most preferably less than 5 wt. %, of a C8 or higher ester monomer, wherein the second vinyl copolymer comprises less than 22 wt. %, preferably less than 15 wt. %, more preferably less than 10 wt. %, most preferably less than 5 wt. %, of a C8 or higher ester monomer, wherein the dispersion does not include any further copolymer comprising greater than 10 wt. % of a C8 or higher ester monomer, based on the weight of all copolymers in the dispersion, and wherein the dispersion comprises particles that comprise both the first vinyl copolymer (A) and the second vinyl copolymer (B).

The vinyl monomers (i) is a methyl(meth)acrylate or a butyl(meth)acrylate, preferably butyl(meth)acrylate, and may be present in the vinyl copolymers in an amount of 55 - 95 wt. %, preferably 65 - 95 wt. %, or 75 - 95 wt. %, most preferably 85 - 95 wt. % based on the total weight of the vinyl copolymer.

In an embodiment, the vinyl copolymer component (i) may be selected from the group consisting of methyl(meth) acrylate, ethyl(meth)acrylate, propyl(meth)acrylate, butyl(meth)acrylate and mixtures thereof; and the vinyl copolymer further comprises component (v) diethyl itaconate; and the total of components (i) - (v) comprise at least 80 wt. % of vinyl copolymer.

The carboxylic acid functional vinyl monomer may be (meth)acrylic acid, present in the first vinyl copolymer in an amount of 0.5 to 5 wt. %, preferably 0.5 - 4 wt. %, more preferably 1 - 3 wt. %, most preferably 1 - 2 wt. %, based on the total weight of the first vinyl copolymer, and/or the carboxylic acid functional vinyl monomer (B)(ii) may be present in the second vinyl copolymer in an amount of 0.5 to 5 wt. %, preferably 0.5 - 4 wt. %, more preferably 1 - 4 wt. % or 1 - 5 wt. %, most preferably 2 - 4 wt. % or 2 - 5 wt. %, based on the total weight of the second vinyl copolymer.

The non-ionic hydrophilic vinyl monomers (iii) may be a hydroxy ethyl(meth)acrylate, a hydroxy propyl(meth) acrylate, or a hydroxy butyl(meth)acrylate, present in the first vinyl copolymer (A)(iii) at 0.5 - 5 wt. %, preferably 0.5 - 3 wt. %, more preferably 1 - 2 wt. %, and/or the amount of non-ionic hydrophilic vinyl monomer in the second vinyl copolymer (B)(iii) may be 1 - 8 wt. %, preferably 2 - 6 wt. %, more preferably 3 - 6 wt. %.

In another embodiment, the dispersion further comprises a wet adhesion monomer in the first vinyl copolymer in an amount of 0.1 to 2 wt. % based on the total weight of the first vinyl copolymer, and/or further comprises a wet adhesion monomer in the second vinyl copolymer in an amount of 0.1 to 4 wt. % based on the total weight of the second vinyl copolymer. The wet adhesion monomer may be ethylene urea ethyl methacrylate, N-(2-methacryloyloxyethyl) ethylene urea, 2-methacrylamidoethyl ethylene urea or ureido methacrylate.

The crosslinking monomer in the first vinyl copolymer (A)(iv) and/or in the second vinyl copolymer (B)(iv) may be a ketone functional monomer, an acetoacetyl group functional monomer or a siloxy functional monomer, such as diacetone acrylamide, acetoacetoxy ethyl (meth)acrylate or 3-(trimethoxysilyl)propyl methacrylate. The crosslinking monomer in the first vinyl copolymer (A)(iv) may be present in the first vinyl copolymer in an amount of 0.1 to 10 wt. %, preferably 3 to 7 wt. %, based on the total weight of the first vinyl copolymer, and/or the crosslinking monomer in the second copolymer (B)(iv) may be present in the second vinyl copolymer in an amount of 0.1 to 3 wt. %, preferably 1 to 3 wt. %, based on the total weight of the second vinyl copolymer.

In another embodiment, the dispersion further comprises a compound capable of reacting with a ketone functional monomer, which may be a dihydrazide, diamine or dihydrazine, preferably carbodihydrazide, oxalic acid dihydrazide, succinic acid dihydrazide, glutaric acid dihydrazide, adipic acid dihydrazide, sebacic acid dihydrazide, phtalic acid dihydrazide or terephtalic acid dihydrazide, most preferably adipic acid dihydrazide.

In a different embodiment, the weight ratio of the first vinyl copolymer (A) to the second vinyl copolymer (B) is between 90:10 to 60:40, preferably 85:15 to 65:35, as measured by the respective weights of (A):(B). In another, the dispersion results in two different measurements for Tg, when the dispersion is measured for Tg using Differential Scanning Calorimetry (DSC), and wherein the two different measurements for Tg differ by at least 25 °C.

In yet another embodiment, the first vinyl copolymer and/or the second vinyl copolymer further comprises a chain transfer agent, which may be a mercaptan, halocarbon, alfa-methyl styrene or combinations thereof, preferably mercaptans, more preferably n-dodecyl mercaptan, iso-octyl mercaptan or 3-mercaptopropionic acid.

In still another embodiment, the dispersion comprises less than 0.1 to 5 wt. %, 0.1 to 4 wt. %, 0.1 to 3 wt. &, 0.1 to 2 wt. %, 0.3 to 5 wt. %, 0.3 to 4 wt. %, 0.3 to 3 wt. %, or 0.3 to 2 wt. % of a phosphorus or sulfur containing monomer, based on the total weight of the dispersion.

A coating composition may comprise the dispersion of the present invention, wherein the total amount of C8 or higher ester monomers is less than 35 wt. %, preferably less than 25 wt. %, more preferably less than 15 wt. %, based on the weight of all copolymers in the coating. The coating composition preferably comprises less than 100 g/L of total volatile organic compounds, preferably less than 80 g/L or 60 g/L, most preferably less than 55 g/L volatile organic compounds.

A process for preparing the waterborne dispersion of polymeric particles of the present invention comprises: (I) preparing the first vinyl copolymer (A); (II) preparing the second vinyl copolymer (B); and (III) adding carrier medium (C), wherein the preparation steps (A) and (B) each take place within the carrier medium (C), and wherein within carrier medium (C), (1) first vinyl copolymer (A) is prepared without second vinyl copolymer (B) in carrier medium (C) and then second vinyl copolymer (B) is prepared with first vinyl copolymer (A) in carrier medium (C), or (2) second vinyl copolymer (B) is prepared without first vinyl copolymer (A) in carrier medium (C) and first vinyl copolymer (A) is prepared with second vinyl copolymer (B) in carrier medium (C).

In additional embodiments, (1) at least 50 wt. %, preferably at least 80 wt. %, more preferably at least 95 wt. % of first vinyl copolymer is prepared without second vinyl copolymer in carrier medium (C) and at least 50 wt. %, preferably at least 80 wt. %, more preferably at least 95 wt. % of second vinyl copolymer is prepared with first vinyl copolymer in carrier medium (C), or (2) at least 50 wt. %, preferably at least 80 wt. %, more preferably at least 95 wt. % second vinyl copolymer is prepared without first vinyl copolymer in carrier medium (C) and at least 50 wt. %, preferably at least 80 wt. %, more preferably at least 95 wt. % first vinyl copolymer is prepared with second vinyl copolymer in carrier medium (C).

In yet another embodiment, a process for preparing the waterborne dispersion of polymeric particles of the invention comprises: (I) preparing the first vinyl copolymer (A) in a first carrier medium (C-1); (II) preparing the second vinyl copolymer (B) in a second carrier medium (C-2); and (III) blending the first vinyl copolymer (A) in the first carrier medium (C-1) with the second vinyl copolymer (B) in the second carrier medium (C-2).

Detailed Description of the Invention

The object of the present invention has been achieved by a waterborne dispersion of polymeric particles comprising a first vinyl copolymer and a second vinyl copolymer.

In the invention, the Tg of the first vinyl copolymer in the waterborne dispersion is different from the Tg of the second vinyl copolymer. The first vinyl copolymer has a theoretical Tg of -10 to 25 °C, preferably -5 to 25 °C, most preferably 0 to 25 °C The difference in Tg between the first vinyl copolymer and the second vinyl copolymer is preferably at least 30° C, more preferably 30° C. to 70° C, most preferably 40° C to 65° C. In some embodiments of the invention, the second vinyl copolymer has a theoretical Tg of 55 to 90 °C, preferably 55 to 85 °C, more preferably 55 to 80 °C, most preferably 55 to 75 °C. In different embodiments of the invention, the second vinyl copolymer has a theoretical Tg of 30 - 70 °C, preferably 40 - 65 °C, higher than the Tg of the first vinyl copolymer.

The Tg of a polymer herein stands for the glass transition temperature and is well known to be the temperature at which a polymer changes from a glassy, brittle state to a rubbery state. Tg values of polymers may be calculated using the well-known Fox equation, referenced herein as the "theoretical Tg." Thus the Tg, in degrees Kelvin, of a copolymer having "n" copolymerized comonomers is given by the weight fractions W of each comonomer type and the Tg's of the homopolymers (in degrees Kelvin) derived from each comonomer according to the equation:

$$1/Tg = W_1/Tg_1 + W_2/Tg_2 + \ldots W_n/Tg_n.$$

The calculated Tg in degrees Kelvin may be readily converted to ° C. It is believed that the presence of both polymers having very different glass transition temperatures will achieve results that are usually contradictory: to have a low minimum film formation temperature, while also resulting in a coating with a higher hardness and stain resistance against hydrophobic materials.

In another embodiment, the dispersion may result in two different measurements for Tg, when the dispersion is measured for Tg using Differential Scanning Calorimetry (DSC). Using that method, the two different measurements for Tg may differ by at least 25 °C.

Also in the invention, there is a limited amount of a C8 or higher ester monomer in the first vinyl copolymer, in the second vinyl copolymer and in the waterborne dispersion. A C8 or higher ester monomer is an ester monomer having more than eight carbon atoms in the ester alkyl groups. It has been found that using dispersions with too much C8 or higher ester monomers can compromise the stain resistance against hydrophobic materials in the resulting coating. Examples of such C8 or higher ester monomers include octyl acrylate, lauryl methacrylate, dibutyl itaconate, 2-ethylhexyl acrylate, stearyl acrylate and behenyl acrylate, which each have long chain alkyl groups. Notably, this definition for C8 or higher ester monomer includes dibutyl itaconate, which has a total of eight carbon atoms in the ester alkyl groups, even though it does not contain one single alkyl ester group with more than four carbon atoms. This definition includes a cumulative total of all carbon atoms in the alkyl ester groups. This definition for C8 or higher ester monomer does not, for example, include diethyl itaconate, which has less than eight carbon atoms in the alkyl ester groups, but has more than eight carbon atoms in the entire molecule.

The first vinyl copolymer comprises less than 40 wt. %, preferably less than 30 wt. %, more preferably less than 20 wt. %, more preferably less than 10 wt. %, most preferably less than 5 wt. %, of a C8 or higher ester monomer. The second vinyl copolymer comprises less than 22 wt. %, preferably less than 15 wt. %, more preferably less than 10 wt. %, most preferably less than 5 wt. %, of a C8 or higher ester monomer. The waterborne dispersion does not include any further copolymer comprising greater than 10 wt. % of a C8 or higher ester monomer, based on the weight of all copolymers in the dispersion.

In a preferred embodiment, the total amount of C8 or higher ester monomers in the waterborne dispersion is less than 30 wt. %, preferably less than 25 wt. % or 20 wt. %, more preferably less than 15 wt. % or 10 wt. %, based on the weight of all copolymers in the dispersion.

In some embodiments, the weight ratio of the first vinyl copolymer (A) to the second vinyl copolymer (B) is between 90:10 to 60:40, preferably 85:15 to 65:35, as measured by the respective weights of (A):(B).

Vinyl Copolymers

The first vinyl copolymer and second vinyl copolymer comprises as building blocks at least components (i) a vinyl monomer, (ii) a carboxylic acid functional vinyl monomer, (iii) a non-ionic hydrophilic vinyl monomer and (iv) a crosslinking monomer. It will be understood that as the invention pertains to a paint or coating composition, the vinyl copolymers employed have film-forming properties. The person skilled in the art knows how to generally construct a vinyl polymer suitable for use in paint and coating compositions. By a vinyl copolymer herein is one derived from the addition polymerization (using a free radical process) of at least one olefinically unsaturated monomer which are also known as vinyl monomers.

Component (i)

Examples of vinyl monomers which may be used to form the vinyl copolymer include 1,3-butadiene, isoprene, styrene, a-methyl styrene, divinyl benzene, acrylonitronitrile, methacrylonitrile, dimethyl itaconate, diethyl itaconate, vinyl halides such as vinyl chloride, vinyl esters such as vinyl acetate, vinyl propionate and vinyl esters of versatic acid, heterocyclic vinyl compounds, alkyl esters of mono-olefinically unsaturated dicarboxylic acids (such as di-n-butyl maleate and di-n-butyl fumarate) and, in particular, esters of (meth)acrylic acid of formula $CH_2=CR_1COOR_2$ wherein $R_1$ is H or methyl and $R_2$ is optionally substituted alkyl or cycloalkyl of 1 to 20 carbon atoms (more preferably 1 to 8 carbon atoms) examples of which are methyl(meth)acrylate, ethyl(meth)acrylate, butyl(meth)acrylate (all isomers), isobutyl(meth) acrylate, 2-ethylhexyl(meth)acrylate, isopropyl(meth)acrylate, propyl(meth)acrylate (all isomers) and hydroxyalkyl(meth)acrylates such as hydroxyethyl(meth)acrylate, 2-hydroxypropyl(meth)acrylate and their modified analogues like Tone M-100. (Tone is a trademark of Union Carbide Corporation).

Particularly preferred are vinyl polymers made from a monomer system comprising at least 60 wt % of one or more vinyl monomers of the formula $CH_2=CR_1 COOR_2$ defined above, diethyl itaconate, styrene, $\alpha$-methyl styrene and acrylonitrile. Such preferred vinyl polymers are defined herein as (meth)acrylic polymers. More preferably, the vinyl monomer system contains at least 70 wt % of such monomers and particularly at least 80 wt %. The other monomers in such (meth)acrylic polymers (if used) may include one or more of the other vinyl monomers mentioned above and/or may include ones different to such other monomers. Most preferred monomers include styrene, dimethyl itaconate, diethyl itaconate, methyl(meth)acrylate, ethyl(meth)acrylate, propyl(meth)acrylate and butyl(meth)acrylate, and mixtures thereof.

The term vinyl copolymer as used herein includes one vinyl copolymer as well as more than one vinyl copolymer. The term (meth)acrylate includes both acrylate and methacrylate. Thus, methyl(meth)acrylate includes both methyl acrylate and methyl methacrylate. Similarly, the term ethyl(meth)acrylate includes both ethyl acrylate and ethyl methacrylate. Likewise, the terms propyl(meth)acrylate and butyl(meth)acrylate, include propyl acrylate, propyl methacrylate, butyl acrylate and butyl methacrylate The terms propyl and butyl include iso-propyl, n-propyl, tert-butyl and sec-butyl, and other isomers thereof.

The vinyl copolymers may contain vinyl monomers, which provide an adhesion and/or crosslinking functionality to the resulting polymer coating. Examples of these include (meth)acrylic monomers having at least one free aldehyde, ketone, hydroxyl, epoxy, aceto acetoxy, or amino group; allyl methacrylate, tetraethylene glycol methacrylate and divinyl benzene. Adhesion promoting monomers include amino, urea, or N-heterocyclic groups. Such monomers, when used, are normally used in an amount of from 0 to 5 wt % and more usually from 0 to 2 wt % of the total weight of monomers used for polymerization.

The vinyl monomers of component (i) are chosen because they impart both hydrophobicity and hydrophilicity to the resulting coating or paint. The hydrophobicity imparts water resistance needed for scrub resistance, so the coating is not easily removed. The hydrophilicity is useful in stain resistance of hydrophobic stains, as it makes the stains easier to remove with household cleaning supplies. While these two properties may seem contradictory, it has been found that the inclusion of component (i) allows for a balance of each of these properties. Furthermore, as explained herein, the monomers allow for the copolymers to include other components to add additional functionality, and to improve upon its properties. Also, these monomers allow for different morphologies, with the resulting copolymers.

The first vinyl copolymer (A) may comprise vinyl monomer(s) (A)(i) in an amount of 55 - 95 wt. %, preferably 65 - 95 wt. %, or 75 - 95 wt. %, most preferably 85 - 95 wt. % based on the total weight of the first vinyl copolymer (A). Alternatively, the first vinyl copolymer (A) may comprise vinyl monomer(s) (A)(i) in an amount of 55 - 93 wt. %, preferably 65 - 93 wt. %, or 75 - 93 wt. %, most preferably 85 - 93 wt. % based on the total weight of the first vinyl copolymer (A).

The second vinyl copolymer (B) may comprise vinyl monomer(s) (B)(i) in an amount of 55 - 95 wt. %, preferably 65 - 95 wt. %, or 75 - 95 wt. %, most preferably 85 - 95 wt. %, based on the total weight of the second vinyl copolymer (B). Alternatively, the second vinyl copolymer (B) may comprise vinyl monomer(s) (B)(i) in an amount of 55 - 90 wt. %, preferably 65 - 90 wt. %, or 75 - 90 wt. %, most preferably 85 - 90 wt. % based on the total weight of the first vinyl copolymer (B).

Component (ii)

In an embodiment of the invention, the copolymer(s) are preferably carboxyl-functional copolymer(s) through the addition of a carboxylic acid functional vinyl monomer. Such monomers are ethylenically unsaturated acid functional monomer(s) such as acrylic acid or methacrylic acid, preferably methacrylic acid. Olefinically unsaturated monocarboxylic and/or dicarboxylic acids, such as (meth)acrylic acid, beta carboxy ethylacrylate, fumaric acid and itaconic acid, are other examples which can be used.

The carboxylic acid functional vinyl monomer is believed to provide colloidal stability to the polymer dispersion, which is important for proper storage stability of the polymer dispersion.

The carboxylic acid functional vinyl monomer (A)(ii) may be present in the first vinyl copolymer in an amount of 0.5 to 5 wt. %, preferably 0.5 - 4 wt. %, more preferably 1 - 3 wt. %, most preferably 1 - 2 wt. %, based on the total weight of the first vinyl copolymer, and/or the carboxylic acid functional vinyl monomer (B)(ii) may be present in the second vinyl copolymer in an amount of 0.5 to 5 wt. %, preferably 0.5 - 4 wt. %, more preferably 1 - 4 wt. % or 1 - 5 wt. %, most preferably 2 - 4 wt. % or 2 - 5 wt. %, based on the total weight of the second vinyl copolymer. The carboxylic acid functional monomer may be present in all vinyl copolymers of the waterborne dispersion in an average of 1 - 4 wt %, preferably 1.5 - 3 wt. %, based on the weight of all vinyl copolymers in the dispersion.

Component (iii)

The vinyl copolymers of the invention further comprise a non-ionic hydrophilic vinyl monomer comprising at least one functional group selected from the group consisting of hydroxyl, ureido, epoxy, amide, carbamate, urea and nitrile. The non-ionic hydrophilic vinyl monomers (A)(iii) and (B)(iii) are preferably a hydroxy ethyl(meth)acrylate, a hydroxy propyl(meth)acrylate, or a hydroxy butyl(meth)acrylate, most preferably a hydroxy ethyl(meth)acrylate. The non-ionic hydrophilic monomer is believed to provide hydrophilicity to improve the stain resistance against hydrophobic materials while not compromising scrub resistance.

The amount of non-ionic hydrophilic vinyl monomer in the first vinyl copolymer may be (A)(iii) is 0.5 - 5 wt. %, preferably 0.5 - 3 wt. %, more preferably 1 - 2 wt. %, and/or the amount of non-ionic hydrophilic vinyl monomer in the second vinyl copolymer (B)(iii) is 1 - 8 wt. %, preferably 2 - 6 wt. %, more preferably 3 - 6 wt. %. The amount of non-ionic hydrophilic vinyl monomer in the second vinyl copolymer (B)(iii) may preferably be greater than the amount of non-ionic hydrophilic vinyl monomer in the first vinyl copolymer (A)(iii), preferably greater by an amount of 0.5 - 7.5 wt. %, more preferably 1 - 6 wt. %, most preferably 2 - 5 wt. % or 2 - 4 wt. %, each based on their respective weights relative to the weight of the respective copolymer in which the monomer is present. In another embodiment, the total amount of non-ionic hydrophilic vinyl monomers in the waterborne dispersion is less than 10 wt. %, preferably less than 5 wt. %, most preferably less than 3 wt. %, based on the weight of all copolymers in the dispersion.

Component (iv)

The vinyl copolymers of the invention further comprise a crosslinking monomer. Preferably, the vinyl copolymers of the invention comprise crosslinking monomers capable of 1K crosslinking. 1K crosslinking means that both the functional group incorporated into the polymer and the crosslinker that has functional groups complementary with the functional groups of the polymer are present in the same aqueous polymer dispersions. Examples of complementary functional groups are aldehydes and/or ketones and acetoacetyl groups with carbonyl-reactive diamines and/or hydrazines (or blocked amines and/or blocked hydrazine) and or dihydrazides. Dihydrazides are preferred including carbodihydrazide, oxalic acid dihydrazide, succinic acid dihydrazide, glutaric acid dihydrazide, adipic acid dihydrazide, sebacic acid dihydrazide, phthalic acid dihydrazide, terephthalic acid dihydrazide. Adipic acid dihydrazide is preferred. The crosslinking monomer in the first vinyl copolymer (A)(iv) and/or in the second vinyl copolymer (B)(iv) is preferably a ketone functional monomer, an acetoacetyl group functional monomer or a siloxy functional monomer.

An example of a ketone functional monomer is diacetone acrylamide, an example of a acetoacetyl group functional monomer is acetoacetoxy ethyl (meth)acrylate. Silane condensation is another 1K crosslinking systems, in which first condensation of an alkoxyl silane group (R-Si-O- R', R' = C1-C8 alkoxy) occurs forming silanol groups (Si-OH) followed by the condensation forming siloxane bonds (R-Si-O-Si-R). An example of a siloxy functional monomer is 3-(trimethoxysilyl)propyl methacrylate. In a preferred embodiment of the invention, the crosslinking monomer in the first vinyl copolymer (A)(iv) and/or in the second vinyl copolymer (B)(iv) is diacetone acrylamide, acetoacetoxy ethyl (meth) acrylate or 3-(trimethoxysilyl)propyl methacrylate. Such monomers, when reacted with crosslinkers, act to improve the chemical resistance and the hardness of the resulting coating. The crosslinking monomer in the first vinyl copolymer (A)(iv) is present in the first vinyl copolymer in an amount of 0.1 to 10 wt. %, preferably 3 to 7 wt. %, based on the total weight of the first vinyl copolymer, and/or the crosslinking monomer in the second vinyl copolymer (B)(iv) is present in the second vinyl copolymer in an amount of 0.1 to 3 wt. %, preferably 1 to 3 wt. %, based on the total weight of the second vinyl copolymer.

Other components

In some embodiments of the present invention where component (i) of the first or second vinyl copolymer is methyl(meth)acrylate, ethyl(meth)acrylate, propyl(meth)acrylate or butyl(meth)acrylate, then that copolymer may further comprise component (v) diethyl itaconate; and the total of components (i) - (v) comprise at least 80 wt. % of that vinyl copolymer.

The first or second vinyl copolymer may further comprise a wet adhesion monomer. Preferred wet adhesion monomers that may be used in association with the present invention include ethylene urea ethyl methacrylate, N-(2-methacryloyloxyethyl) ethylene urea, 2-methacrylamidoethyl ethylene urea or ureido methacrylate. The wet adhesion monomer may be present in the first vinyl copolymer in an amount of 0.1 to 2 wt. % based on the total weight of the first vinyl copolymer, and/or in the second vinyl copolymer in an amount of 0.1 to 4 wt. % based on the total weight of the second vinyl copolymer.

In another embodiment, the first vinyl copolymer may further comprise an ester monomer selected from the group consisting of dibutyl itaconate, 2-octyl acrylate, 2-ethylhexyl acrylate, cyclohexyl(meth)acrylate and isobornyl (meth) acrylate. These may be done to increase hydrophobicity of the resulting vinyl copolymer. The ester monomer may be present in an amount of 5 - 30 wt. %, preferably 5-20 wt. %, more preferably 5 - 10 wt. %, based on the total weight of the first vinyl copolymer. The ester monomer may also be present in the second vinyl copolymer in an amount of 3 - 20 wt. %, preferably 3 - 15 or 3 - 10 wt. %, based on the total weight of the second vinyl copolymer.

The first or second vinyl copolymer may further comprise a chain transfer agent, to control the molecular weight of the copolymer. Examples of chain transfer agents include a mercaptan, halocarbon, a-methyl styrene or combinations thereof, preferably mercaptans, more preferably n-dodecyl mercaptan, iso-octyl mercaptan or 3-mercaptopropionic acid.

The first or second vinyl copolymer may also further comprise a monomer comprising 2-6 polymerizable vinyl functional groups. Such compounds increase the molecular weight of the vinyl copolymers herein, and may additionally add branching to the copolymers. These changes are believed to result in improved scrub resistance for the resulting paint or coating. The monomer comprising 2-6 polymerizable vinyl functional groups may be a diacrylate or a divinyl, preferably allyl methacrylate, divinylbenzene, ethylene glycol di(meth)acrylate, butanediol di(meth)acrylate, hexanediol di(meth) acrylate, or trimethylolpropane tri(meth)acrylate.

The dispersion of the present invention may further comprise a compound capable of reacting with a ketone or aldehyde functional monomer. This component acts as the crosslinker to react with component (iv) of the vinyl copolymers. It may be present in the dispersion, or in other embodiments, in the coating, at the equivalent molar ratio or hydrazide groups to the total amount of aldehyde and ketone groups from 1:0.1-0.95, preferably 1:0.15-0.85, more preferably 1:0.2-0.75, most preferably 1:0.25-0.70. These molar ratios refer to, on the left side, the total amount of hydrazide, hydrazine and block amine groups, and on the right side, the total amount of aldehyde and ketone groups. This ratio represents the portions of groups that are expected to react with each other in forming the copolymers. Such compounds capable of reacting with a ketone or aldehyde functional monomer may be a dihydrazide, diamine or dihydrazine, preferably carbodihydrazide, oxalic acid dihydrazide, succinic acid dihydrazide, glutaric acid dihydrazide, adipic acid dihydrazide, sebacic acid dihydrazide, phtalic acid dihydrazide or terephtalic acid dihydrazide, most preferably adipic acid dihydrazide.

In another embodiment, the dispersion comprises less than 0.1 to 5 wt. %, 0.1 to 4 wt. %, 0.1 to 3 wt. &, 0.1 to 2 wt. %, 0.3 to 5 wt. %, 0.3 to 4 wt. %, 0.3 to 3 wt. %, or 0.3 to 2 wt. % of a phosphorus or sulfur containing monomer, based on the total weight of the dispersion. In another embodiment of the invention, the dispersion is free from any phosphorus or sulfur containing monomer. It is believed that too much phosphorus or sulfur containing monomers would damage some of the resulting properties, in particular the scrub resistance due to the hydrophilic nature of these monomers.

Preparation

The preparation of the vinyl polymers of the invention may be executed so as to provide a multiphase polymer. The term multiphase is used to refer to any polymer constructions that allow combining polymers of different properties and/or morphologies into a single film-forming coating composition. These constructions include: multiphase latexes, such as oligomer-polymer constructs where an oligomer is made first and is followed by an emulsion polymerization step in presence of an oligomer, sequential polymers such as core-shell polymers, and seeded polymers. Also, a blend of two polymers may be used or a combination of the foregoing.

The multiphase vinyl polymer refers to a polymer system that has been formed by a multistage emulsion polymerization process in which two or more polymer phases are prepared by the sequential aqueous emulsion polymerization of two or more distinct monomer mixtures. Thus in its simplest and preferred form a first polymer phase is preferably formed by emulsion polymerization, which could for example be either the first or second vinyl copolymer as defined in the invention and then a second polymer phase is preferably formed by emulsion polymerization in the presence of the first polymer phase; the second polymer phase would be the other vinyl copolymer that was not used in the first polymer phase. More complex multistage polymer designs include additional copolymers.

In making the multiphase polymers used in the present invention, customary polymerization methods can be used, including processing adjuvants such as initiators and surfactants. In addition, buffers may be added to control the pH (NaHCO3 and NH4OH), , and a biocide/ preservative. These additional components are typically added for dispersions used in such coating compositions, and are added in the examples to create a sufficient comparison to commercially available paint compositions. A binder may be added, and a seed latex may be added as part of the binder to control the particle size.

The vinyl copolymers used in the invention composition are normally made using free radical addition polymerization in an aqueous emulsion polymerization process to form an aqueous polymer emulsion. Such an aqueous emulsion polymerization process is, in itself, well known in the art and need not be described in great detail. Suffice to say that such a process involves dispersing the vinyl monomers in an aqueous carrier medium and conducting polymerization using a free-radical yielding initiator and (usually) appropriate heating (e.g. 30 to 120° C.) and agitation (stirring) being employed. The aqueous emulsion polymerization can be effected using one or more commonly used surfactants. Anionic and non-ionic surfactants and combinations of the two types are preferred.

Suitable free-radical-yielding initiators include inorganic peroxides such as K, Na or ammonium persulphate, hydrogen peroxide, or percarbonates; organic peroxides, such as acyl peroxides including e.g. benzoyl peroxide, alkyl hydroperoxides such as t-butyl hydroperoxide and cumene hydroperoxide; dialkyl peroxides such as di-t-butyl peroxide; peroxy esters such as t-butyl perbenzoate and the like; mixtures may also be used. The peroxy compounds are in some cases advantageously used in combination with suitable reducing agents (redox systems) such as Na or K pyrosulphite or bisulphite and isoascorbic acid. Metal compounds such as Fe.EDTA (EDTA is ethylene diamine tetracetic acid) may also be usefully employed as part of the redox initiator system. Azo functional initiators may also be used. Preferred azo initiators include azobis(isobutyronitrile) and 4,4'-azobis(4-cyanovaleric acid). The amount of initiator or initiator system used is conventional, e.g. within the range 0.05 to 4 wt % based on the total vinyl monomers used. Preferred initiators include ammonium persulphates, sodium persulphates, potassium persulphates, azobis(isobutyronitrile), 4,4'-azobis(4-cyanovaleric acid) and/or t-butyl hydroperoxide.

The amount of surfactant used in the emulsion polymerization to make a multistage polymer is preferably 0.25 to 5 wt % based on the total weight of monomers used for the first and second vinyl copolymers of the dispersion, more preferably 0.5 to 3 wt % and particularly 0.9 to 1.7 wt %.

In one embodiment, the first or second vinyl copolymer is prepared in a carrier medium without the other vinyl copolymer being present, and then the other vinyl copolymer, that is the second or first vinyl copolymer is prepared in the same carrier medium, with at least some of the first or second vinyl copolymer already have been prepared and is present in the carrier medium. Different amounts of each copolymer may have finished polymerizing. For example, (1) at least 50 wt. %, preferably 80 wt. %, more preferably 95 wt. % of the first vinyl copolymer is prepared without the second vinyl copolymer in the carrier medium and at least 50 wt. %, preferably 80 wt. %, more preferably 95 wt. % of the second vinyl copolymer is prepared with first vinyl copolymer in carrier medium, or alternatively, (2) at least 50 wt. %, preferably 80 wt. %, more preferably 95 wt. % of the second vinyl copolymer is prepared without the first vinyl copolymer in the carrier medium and at least 50 wt. %, preferably 80 wt. %, more preferably 95 wt. % of the first vinyl copolymer is prepared with the second vinyl copolymer in carrier medium.

In another embodiment, the first vinyl copolymer is prepared in a first carrier medium without the second vinyl copolymer being present, and then the second vinyl copolymer is prepared in a second carrier medium, without the first vinyl copolymer being present. Then in a third step, the copolymers and their respective carrier mediums are blended to form the waterborne dispersion.

The carrier medium is preferably water, but it may also be a blend of water and a solvent or an alcohol. However, doing so may increase the total amount of VOCs in the resulting dispersion, which is to be avoided if one of the goals is to minimize total VOCs. If volatile organic compounds are used, it should be limited to less than 100 g/L of total volatile organic compounds, preferably less than 80 g/L or 60 g/L, most preferably less than 55 g/L volatile organic compounds, based on the volume of the coating composition.

Coating composition

The present invention also relates to a coating composition, which may be used as a paint. The coating composition comprises the dispersion comprising the first vinyl copolymer and the second vinyl copolymer as defined in the present invention.

In an embodiment of the coating composition, the first vinyl copolymer and the second vinyl copolymer comprise 40 - 100 wt. %, preferably 50 - 100 wt. %, more preferably 60 - 100 wt. % or 70 - 100 wt. %, most preferably 80 - 100 wt. % of all (co)polymers in the composition. In another, the total amount of C8 or higher ester monomers is less than 35 wt. %, preferably less than 25 wt. %, more preferably less than 15 wt. %, based on the weight of all (co)polymers in the coating composition. The coating composition may also be limited in the amount of VOCs, and may thus comprise less than 100 g/L of total volatile organic compounds, preferably less than 80 g/L or 60 g/L, most preferably less than 55 g/L volatile organic compounds.

The coating composition may further comprise a compound capable of reacting with a ketone functional monomer, such as a dihydrazide, diamine or dihydrazine, preferably carbodihydrazide, oxalic acid dihydrazide, succinic acid dihydrazide, glutaric acid dihydrazide, adipic acid dihydrazide, sebacic acid dihydrazide, phtalic acid dihydrazide or terephtalic acid dihydrazide, most preferably adipic acid dihydrazide.

As shown in the examples below, the coating incorporating the dispersion of the present invention exhibits unusual properties in both scrub and stain resistance, while having low VOCs.

## Examples

The present invention is now illustrated by reference to the following examples. Unless otherwise specified, all parts, percentages and ratios are on a weight basis.

Components and abbreviations used:

ADH = Adipic acid dihydrazide
APS = Ammonium persulfate
n-BA = n-Butyl acrylate
BYK 024 = VOC-free silicone defoamer for high gloss aqueous coatings, available from Altana
Covergirl #305 = Covergirl Colorlicious Lipstick #305 Hot
Covergirl #540 = Covergirl Continuous Color Lipstick #540 Midnight Mauve
Covergirl #575 = Covergirl Continuous Color #575 Really Red
DAAM = Diacetone acrylamide
DPM = Co-solvent dipropylene glycol monomethyl ether, a coalescent aid
DPnB = Co-solvent dipropylene glycol monobutyl ether, a coalescent aid
EcoSurf LF-30 = Water soluble nonionic low foam surfactant, available from DOW
HEMA = 2-Hydroxyethyl methacrylate
MAA = Methacrylic acid
MEEU = N-(2-Methacryloyloxyethyl) ethylene urea (50% in water)
MFFT = Minimum film formation temperature
MMA = Methyl methacrylate
NaHCO3 = Sodium bicarbonate
Seed latex = Acrylic-based seed latex (Tg: 37.5 °C; solids: 24%; particle size: 51 nm)
NH4OH = Ammonium hydroxide (28% in water)
2-OA = 2-Octyl acrylate
Optiwhite P = Flash calcined clay used to extend and control the distribution of TiO2 in paints, available from Burgess
iOTG = Isooctyl thiogylcolate
Proxel Ultra 10 = Preservative 1,2-benzisothiazolin-3-one (10% in water), available from Lonza
PVC = Pigment volume concentration used to describe the volume of pigment versus the volume of binder used
Rheolate 350D = VOC-free nonionic synthetic associative thickener, a rheology modifier available from Elementis
Rheolate 666= Solvent-free nonionic synthetic associative thickener, a rheology modifier available from Elementis
SLS = Sodium lauryl sulfate (30% in water)
Tamol 165A = Hydrophobic copolymer dispersant (21% solids), to assist dispersing the TiO2 and other pigments and prevent flocculation, available from DOW
Ti-Pure R-706 = Rutile TiO2 pigment, assists in opacifying a pigment, available from Chemours

## Test methods

Determining stain resistance:

Films were prepared and tested as per ASTM D4828 - 94 (2016), by applying 7 mil wet films of a coating sample on byko-chart Black Scrub Panel P121-10N. Lipstick samples Covergirl #305, Covergirl #575, and Covergirl #540 were applied using 5 single rubs in 0.5 in strips perpendicular to the direction of the cast film. The coated panels were then subjected to 100 cycles, at a rate of 37 cycles per minute, on a BYK Gardner Abrasion Tester (5060) using a solution of water (15 g) and nonabrasive medium (10 g, as described in ASTM D3450 -15). The stain resistance was then rated based on the amount of stain remaining on the panel compared to the preserved original stain under the clear tape strip using the following guide: 5 - perfect with no stain remaining; 4 - mostly clean with faint stain remaining; 3 - moderately clean with slight stain remaining; 2 - slightly clean with readily visible stain remaining; 1 - no difference after cleaning with original stain remaining.

Determining scrub resistance:

Films were prepared and tested as per ASTM D2486 - 17 by applying 7 mil wet films of a coating sample on byko-chart Black Scrub Panel P121-10N. The coated panels were then subjected to ASTM D2486 - 17 Test Method B on a BYK Gardner Abrasion Tester (model 5060, with ASTM D2486 accessory kit) at a rate of 37 cycles per minute, using abrasive scrub medium (10 g, as described in ASTM D2486 - 17 and purchased from BYK). The number of cycles was recorded for each sample to reach failure point, as defined by a continuous thin line was film was removed across the 0.5 in width of the shim. The final scrub resistance was recorded as an average of 3 failure points, excluding any points that differ by more than 30% of the others. The final scrub resistance was then reported as a percentage of a commercial control interior paint ( Behr Dynasty 3650 - Ultra-Pure White Semi-Gloss Enamel Interior Stain-Blocking Paint & Primer, from Behr Paint Company, Santa Ana, California, USA) that was tested using an identical method on the same equipment and the same day. A percentage greater than 100% signifies increased scrub resistance of the sample compared to the commercial control.

MFFT: Minimum Film Formation Temperature

7 mil wet films were prepared and tested as per ASTM D2354 - 98. MFFT values were reported to the nearest 1.0 °C.

pH:

The pH was measured using an Orion pH meter.

Solids:

The solid content of the dispersion was measured on a HC103 halogen moisture analyzer from Mettler Toledo at a temperature of 160 °C.

Viscosity:

Viscosity was determined with a Brookfield DV-1 viscometer (spindle 62, 60 rpm, 23 °C).

Particle size:

The intensity average particle size, z-average, has been determined using a Malvern Zetasizer Nano S90.

Table 1: theoretical Tg for monomers

| Monomer | Tg (°C) |
|---|---|
| Acrylic acid | 103 |
| Acetoacetoxy ethyl methacrylate | 18 |
| Acrylonitrile | 105 |
| n-Butyl acrylate | -40 |
| n-Butyl methacrylate | 35 |
| tert-Butyl methacrylate | 120 |
| Diacetone acrylamide | 65 |
| Dibutyl itaconate | 15 |
| Diethyl itaconate | 58 |
| 2-(Dimethylamino)ethyl methacrylate | 19 |
| Dimethyl itaconate | 95 |
| Ethyl acrylate | -8 |
| 2-Ethylhexyl acrylate | -50 |
| Ethyl methacrylate | 65 |
| Ethoxyethoxy ethyl acrylate | -58 |
| Fumaric acid | 157 |
| 4-Hydroxybutyl acrylate | -65 |

(continued)

| Monomer | Tg (°C) |
|---|---|
| 2-Hydroxyethyl acrylate | -15 |
| 2-Hydroxyethyl methacrylate | 55 |
| Hexyl methacrylate | 3 |
| 2-Hydroxypropyl acrylate | -7 |
| 2-Hydroxypropyl methacrylate | 73 |
| Isobutyl methacrylate | 53 |
| Isobornyl methacrylate | 110 |
| Itaconic acid | 61 |
| Lauryl methacrylate | -65 |
| Methyl acrylate | 10 |
| 2-Methacrylamidoethyl ethylene urea | 87 |
| Methacrylic acid | 185 |
| 2-Methacryloyloxyethyl ethylene urea | 47 |
| Methyl methacrylate | 119 |
| 2-Octyl acrylate | -45 |
| Stearyl methacrylate | 38 |
| Styrene | 104 |
| Vinyl acetate | 35 |

Procedure for Inventive Example 1:

A 2000 cm3 flask equipped with a thermometer and overhead stirrer was charged with water (475 g), SLS (2 g), NaHCO3 (0.47 g), and NH4OH (0.34 g) and heated to 81 °C while stirring under a nitrogen atmosphere. At 81 °C a solution of APS (0.7 g) and water (32 g) was added over 1 minute, then the reaction was stirred for at 81 °C for 5 minutes. At 81 °C 10% of a first vinyl copolymer monomer mixture of water (152.8 g), SLS (14.6 g), NaHCO3 (0.45 g), MEEU (11.82 g), DAAM (29.54 g), MAA (8.86 g), n-BA (292.48 g), MMA (242.26 g), HEMA (8.86 g), and iOTG (5.91 g) was added. At 85 °C the remaining 90% of the first vinyl copolymer monomer mixture was added over a period of 120 minutes. Together with this mixture, 33% of an initiator mixture of water (120 g), APS (2.35 g), NaHCO3 (0.32 g), and SLS (0.86 g) was added over a period of 120 minutes. 30 minutes into this, both feeds were paused and seed latex (40 g) was added. The reaction was stirred for 5 minutes at 85 °C, then both feeds were resumed. At the end of the feeds water (9.2 g) was added and the reaction was stirred at 85 °C for 20 minutes. At 85 °C 25% of the initiator mixture was added over a period of 90 minutes. Together with this mixture, a second vinyl copolymer monomer mixture of water (86 g), NaHCO3 (0.15 g), SLS (6 g), MEEU (11.82 g), iOTG (1.97 g), MAA (5.91 g), DAAM (3.94 g), n-BA (49.24 g), MMA (124.08 g), and HEMA (8.87 g) was added over a period of 120 minutes. At the end of the feeds water (5 g) was added. At 85 °C the remaining 42% of the initiator mixture was added over a period of 90 minutes. At the end of the feed water (5 g) was added. At 80 °C a solution of water (5.5 g) and NH4OH (5.5 g) was added over a period of 15 minutes. The reaction was stirred for 15 minutes at 80 °C, then cooled to room temperature. At 35 °C ADH (12.05 g) was added, and the reaction was stirred for 10 minutes. Then a mixture of water (5.4 g) and Proxel Ultra 10 (5.4 g) was added, and the reaction was stirred for 5 minutes. The reaction was filtered through a cloth to remove any coagulum formed during the reaction. Solids: 45.9%; pH: 8.43; viscosity: 60 mPas; particle size: 119 nm; first vinyl copolymer Tg: 17 °C; second vinyl copolymer Tg : 58 °C; MFFT: 13 °C. The prepolymer of examples 1 and 2 were made with the following materials:

Table 2: Composition of the vinyl copolymers of Inventive Example 1 and their specifications. Amounts are in wt. % of their respective copolymer, unless indicated otherwise:

| First Vinyl Copolymer | |
|---|---|
| MMA | 41 |

(continued)

| First Vinyl Copolymer | |
|---|---|
| BA | 50 |
| DAAM | 5 |
| MEEU | 1 |
| MAA | 1.5 |
| HEMA | 1.5 |
| Second Vinyl Copolymer | |
| MMA | 62.5 |
| BA | 25 |
| DAAM | 2 |
| MEEU | 3 |
| MAA | 3 |
| HEMA | 4.5 |
| Specifications of the dispersion: | |
| First Vinyl Copolymer Tg (°C) | 17 |
| Second Vinyl Copolymer Tg (°C) | 58 |
| Weight Ratio of First and Second Vinyl Copolymers | 75:25 |
| Solids (wt%) | 45.9 |
| pH | 8.43 |
| Viscosity (mPas) | 60 |
| z-Average particle size (nm) | 119 |
| MFFT (°C) | 13 |

A coating formulation was prepared with the polymeric dispersion created above. Specifically, a paint composition was prepared with the following ingredients known for use in paint compositions: Water (50 g), BYK 024 (1.5 g), Tamol 165A (7.1 g), EcoSurf LF-30 (1 g), Optiwhite P (10 g), and Ti-Pure R-706 (110.82 g). The coating ingredients listed immediately above were combined and mixed with a high-speed disperser until a grind of 6-7 Hegman was achieved. The grind was then added to a mixture of the polymeric dispersion of Inventive Example 1 (284.02 g), water (35.45 g), DPM (6 g), DPnB (2.75 g), and BYK 024 (0.5 g). After mixing Rheolate 350D (7 g) and Rheolate 666 (3 g) were added. The VOC of the resulting coating was calculated to be 51.67 g/L.

Procedure for Comparative Example 2:

The procedure was followed as described above for Inventive Example 1, however the ingredients and amounts were changed as follows. The first vinyl copolymer monomer mixture: water (152.8 g), SLS (14.6 g), NaHCO3 (0.45 g), MEEU (11.82 g), DAAM (29.54 g), MAA (8.86 g), 2-OA (290.96 g), MMA (243.78 g), HEMA (8.86 g), and iOTG (5.91 g). Then a second vinyl copolymer monomer mixture: water (86 g), NaHCO3 (0.15 g), SLS (6 g), MEEU (11.82 g), iOTG (1.97 g), MAA (5.91 g), DAAM (3.94 g), 2-OA (49.24 g), MMA (124.08 g), and HEMA (8.87 g). Solids: 45.7%; pH: 8.3; viscosity: 100 mPas; particle size: 118 nm; first vinyl copolymer Tg: 14 °C; second vinyl copolymer Tg: 56 °C; MFFT: 14 °C.

Table 3: Composition of the vinyl copolymers of Comparative Example 2 and their specifications. Amounts are in wt. % of their respective copolymer, unless indicated otherwise:

| First Vinyl Copolymer | |
|---|---|
| MMA | 41 |
| 2-OA | 50 |

(continued)

| First Vinyl Copolymer | |
|---|---|
| DAAM | 5 |
| MEEU | 1 |
| MAA | 1.5 |
| HEMA | 1.5 |
| Second Vinyl Copolymer | |
| MMA | 62.5 |
| 2-OA | 25 |
| DAAM | 2 |
| MEEU | 3 |
| MAA | 3 |
| HEMA | 4.5 |
| Specifications of the dispersion: | |
| First Vinyl Copolymer Tg (°C) | 14 |
| Second Vinyl Copolymer Tg (°C) | 56 |
| Weight Ratio of First and Second Vinyl Copolymers | 75:25 |
| Solids (wt %) | 45.7 |
| pH | 8.3 |
| Viscosity (mPas) | 100 |
| z-Average particle size (nm) | 118 |
| MFFT (°C) | 14 |

Several additional measurements are added to ensure consistency with the product, and its intended use in a paint or similar coating application. Solids content (percent by weight) is tracked to ensure consistency with current paint or coating products. Solids content is also important for shipping and storage as a higher solids content means more polymer in a smaller volume of wet product. High pH levels can also cause issues with viscosity stability, especially with high levels of hydrophilic/acid monomers, so they are typically monitored. Ensuring viscosity has not been compromised may be important in assessing any damage from strong acid monomers or other constituents. Particle size is also tracked to ensure consistent quality in paint and other coating formulations. Furthermore, particle size can be important as is smaller particles tend to have a stronger driving force for coalescence, and therefore may enhance film formation. MFFT, or minimum film formation temperature, highlights the ability to form defect free films at low temperatures, which classically requires the use of high levels of VOCs.

A coating formulation was prepared with the polymeric dispersion created above, namely the same paint composition was created as in Inventive Example 1. However, instead of adding the polymeric dispersion of Inventive Example 1, the polymeric dispersion of Comparative Example 2 (shown immediately above) was added, in an amount of 284.02g. All other amounts of other ingredients are the same as the amounts given in preparing the coating formulation in Inventive Example 1. The VOC of the resulting coating was calculated to be 51.85 g/L.

Table 4: Scrub and Stain Resistance Test Results

| Coating made from Example | Scrub Resistance (% vs Control) | Stain Resistance - Covergirl #305 | Stain Resistance - Covergirl #575 | Stain Resistance - Covergirl #540 |
|---|---|---|---|---|
| Inventive Example1 | 159% | 5 | 5 | 5 |
| Comparative Example 2 | 70% | 3 | 3 | 5 |

As shown above, the coating made from inventive example 1 shows surprising results: a dramatic improvement in scrub resistance, stain resistance - Covergirl #305, and stain resistance - Covergirl #575, in comparison to the coating made from Comparative Example 2.

**Claims**

1. A waterborne dispersion of polymeric particles comprising:

    (A) a first vinyl copolymer having a theoretical Tg of -10 to 25 °C, preferably -5 to 25 °C, most preferably 0 to 25 °C, which is a reaction product of:

    (i) a vinyl monomer selected from the group consisting of styrene, diethyl itaconate, methyl(meth)acrylate, ethyl(meth)acrylate, propyl(meth)acrylate, butyl(meth)acrylate and mixtures thereof,
    (ii) a carboxylic acid functional vinyl monomer,
    (iii) a non-ionic hydrophilic vinyl monomer comprising at least one functional group selected from the group consisting of hydroxyl, ureido, epoxy, amide, carbamate, urea and nitrile, and
    (iv) a crosslinking monomer different from monomers (i) - (iii);

    (B) a second vinyl copolymer having a theoretical Tg of at least 30 °C higher than the Tg of the first vinyl copolymer, which is a reaction product of:

    (i) a vinyl monomer selected from the group consisting of styrene, diethyl itaconate, methyl(meth)acrylate, ethyl(meth)acrylate, propyl(meth)acrylate, butyl(meth)acrylate and mixtures thereof,
    (ii) a carboxylic acid functional vinyl monomer,
    (iii) a non-ionic hydrophilic vinyl monomer comprising at least one functional group selected from the group consisting of hydroxyl, ureido, epoxy, amide, carbamate, urea and nitrile, and
    (iv) a crosslinking monomer different from monomers (i) - (iii); and

    (C) a carrier medium;
    wherein the first vinyl copolymer comprises less than 40 wt. %, preferably less than 30 wt. %, more preferably less than 20 wt. %, more preferably less than 10 wt. %, most preferably less than 5 wt. %, of a C8 or higher ester monomer,
    wherein the second vinyl copolymer comprises less than 22 wt. %, preferably less than 15 wt. %, more preferably less than 10 wt. %, most preferably less than 5 wt. %, of a C8 or higher ester monomer,
    wherein the dispersion does not include any further copolymer comprising greater than 10 wt. % of a C8 or higher ester monomer, based on the weight of all copolymers in the dispersion, and
    wherein the dispersion comprises particles that comprise both the first vinyl copolymer (A) and the second vinyl copolymer (B).

2. The dispersion of claim 1, wherein the vinyl monomer (A)(i) and/or vinyl monomer (B)(i) is a methyl(meth)acrylate or a butyl(meth)acrylate, preferably butyl(meth)acrylate.

3. The dispersion of claim 1 or 2, wherein in the first vinyl copolymer: component (A)(i) is selected from the group consisting of methyl(meth)acrylate, ethyl(meth)acrylate, propyl(meth)acrylate, butyl(meth)acrylate and mixtures thereof; and the first vinyl copolymer further comprises component (A)(v) diethyl itaconate; and the total of components (A)(i) - (v) comprise at least 80 wt. % of first vinyl copolymer (A).

4. The dispersion of any of the preceding claims, wherein in the second vinyl copolymer: component (B)(i) is selected from the group consisting of methyl(meth)acrylate, ethyl(meth)acrylate, propyl(meth)acrylate, butyl(meth)acrylate and mixtures thereof; and the second vinyl copolymer further comprises component (B)(v) diethyl itaconate; and the total of components (B)(i) - (v) comprise at least 80 wt. % of second vinyl copolymer (B).

5. The dispersion of any of the preceding claims, wherein the carboxylic acid functional vinyl monomer is (meth)acrylic acid.

6. The dispersion of any of the preceding claims, wherein the carboxylic acid functional vinyl monomer (A)(ii) is present in the first vinyl copolymer in an amount of 0.5 to 5 wt. %, preferably 0.5 - 4 wt. %, more preferably 1 - 3 wt. %, most preferably 1 - 2 wt. %, based on the total weight of the first vinyl copolymer, and/or the carboxylic acid functional vinyl monomer (B)(ii) is present in the second vinyl copolymer in an amount of 0.5 to 5 wt. %, preferably 0.5 - 4 wt. %, more preferably 1 - 4 wt. % or 1 - 5 wt. %, most preferably 2 - 4 wt. % or 2 - 5 wt. %, based on the total weight of the second vinyl copolymer.

7. The dispersion of any of the preceding claims, wherein the carboxylic acid functional monomer is present in all vinyl copolymers of the waterborne dispersion in an average of 1 - 4 wt %, preferably 1.5 - 3 wt. %, based on the weight of all vinyl copolymers in the dispersion.

8. The dispersion of any of the preceding claims, wherein the non-ionic hydrophilic vinyl monomers (A)(iii) and (B)(iii) are a hydroxy ethyl(meth)acrylate, a hydroxy propyl(meth)acrylate, or a hydroxy butyl(meth)acrylate.

9. The dispersion of any of the preceding claims, wherein the amount of non-ionic hydrophilic vinyl monomer in the first vinyl copolymer (A)(iii) is 0.5 - 5 wt. %, preferably 0.5 - 3 wt. %, more preferably 1 - 2 wt. %, and/or the amount of non-ionic hydrophilic vinyl monomer in the second vinyl copolymer (B)(iii) is 1 - 8 wt. %, preferably 2 - 6 wt. %, more preferably 3 - 6 wt. %.

10. The dispersion of any of the preceding claims, wherein the total amount of C8 or higher ester monomers in the waterborne dispersion is less than 30 wt. %, preferably less than 25 wt. % or 20 wt. %, more preferably less than 15 wt. % or 10 wt. %, based on the weight of all copolymers in the dispersion.

11. The dispersion of any of the preceding claims wherein the crosslinking monomer in the first vinyl copolymer (A)(iv) and/or in the second vinyl copolymer (B)(iv) is a ketone functional monomer, an acetoacetyl group functional monomer or a siloxy functional monomer, preferably diacetone acrylamide, acetoacetoxy ethyl (meth)acrylate or 3-(trimethoxysilyl)propyl methacrylate.

12. The dispersion of any of the preceding claims, wherein the first vinyl copolymer further comprises an ester monomer selected from the group consisting of dibutyl itaconate, 2-octyl acrylate, 2-ethylhexyl acrylate, cyclohexyl(meth) acrylate and isobornyl (meth)acrylate, in an amount of 5 - 30 wt. %, preferably 5-20 wt. %, more preferably 5 - 10 wt. %, based on the total weight of the first vinyl copolymer.

13. The dispersion of any of the preceding claims, wherein the second vinyl copolymer further comprises an ester monomer selected from the group consisting of dibutyl itaconate, 2-octyl acrylate, 2-ethylhexyl acrylate, cyclohexyl(meth)acrylate and isobornyl (meth)acrylate, in an amount of 3 - 20 wt. %, preferably 3-15 or 3 - 10 wt. %, based on the total weight of the second vinyl copolymer.

14. The dispersion of the any of the preceding claims, wherein the dispersion comprises less than 0.1 to 5 wt. %, 0.1 to 4 wt. %, 0.1 to 3 wt. &, 0.1 to 2 wt. %, 0.3 to 5 wt. %, 0.3 to 4 wt. %, 0.3 to 3 wt. %, or 0.3 to 2 wt. % of a phosphorus or sulfur containing monomer, based on the total weight of the dispersion.

15. A coating composition comprising the dispersion of any of the preceding claims, wherein the coating further comprises a compound capable of reacting with a ketone functional monomer, preferably a dihydrazide, diamine or dihydrazine, preferably carbodihydrazide, oxalic acid dihydrazide, succinic acid dihydrazide, glutaric acid dihydrazide, adipic acid dihydrazide, sebacic acid dihydrazide, phtalic acid dihydrazide or terephtalic acid dihydrazide, most preferably adipic acid dihydrazide.

Europäisches
Patentamt
European
Patent Office
Office européen
des brevets

## EUROPEAN SEARCH REPORT

**Application Number**

EP 24 18 0248

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/053595 A1 (VALSPAR SOURCING INC [US]) 7 April 2016 (2016-04-07) <br> * paragraph [0005] - paragraph [0015] * <br> * paragraph [0026] - paragraph [0036] * <br> * paragraph [0046] - paragraph [0066] * <br> * abstract; claims 1-20 * | 1-15 | INV. <br> C09D5/02 |
| X | WO 2021/262590 A1 (ROHM & HAAS [US]) 30 December 2021 (2021-12-30) <br> * page 2, line 1 - page 3, line 6 * <br> * page 4, line 13 - page 6, line 13 * <br> * abstract; claims 1-18; examples 1-3; tables 1, 2 * | 1-15 | |
| X | WO 2014/097309 A1 (ASIAN PAINTS LTD [IN]) 26 June 2014 (2014-06-26) <br> * page 20, line 8 - page 22, line 18 * <br> * page 22, line 21 - page 25, line 25 * <br> * abstract; claims 1-46; examples 1-55; tables 1-40 * | 1-15 | |
| X | WO 2024/077328 A1 (DULUXGROUP AUSTRALIA PTY LTD [AU]) 18 April 2024 (2024-04-18) <br> * page 2, line 29 - page 3, line 31 * <br> * page 8, line 1 - page 9, line 28 * <br> * abstract; claims 1-14; tables 1-18 * | 1-15 | **TECHNICAL FIELDS SEARCHED (IPC)** <br><br> C09D |
| X | WO 2020/144360 A1 (NOURYON CHEMICALS INT BV [NL]) 16 July 2020 (2020-07-16) <br> * page 2, line 3 - page 3, line 29 * <br> * page 11, line 14 - page 14, line 17 * <br> * abstract; claims 1-12; examples 1-3 * | 1-15 | |

The present search report has been drawn up for all claims

| Place of search | Date of completion of the search | Examiner |
|---|---|---|
| Munich | 4 November 2024 | Glomm, Bernhard |

EPO FORM 1503 03.82 (P04C01)

## ANNEX TO THE EUROPEAN SEARCH REPORT
## ON EUROPEAN PATENT APPLICATION NO.

EP 24 18 0248

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2024

| Patent document cited in search report | | Publication date | Patent family member(s) | | Publication date |
|---|---|---|---|---|---|
| WO 2016053595 | A1 | 07-04-2016 | AU | 2015324421 A1 | 09-02-2017 |
| | | | CA | 2957896 A1 | 07-04-2016 |
| | | | CN | 106687536 A | 17-05-2017 |
| | | | CN | 117264491 A | 22-12-2023 |
| | | | EP | 3191553 A1 | 19-07-2017 |
| | | | US | 2017174904 A1 | 22-06-2017 |
| | | | US | 2020190339 A1 | 18-06-2020 |
| | | | US | 2021087409 A1 | 25-03-2021 |
| | | | WO | 2016053595 A1 | 07-04-2016 |
| WO 2021262590 | A1 | 30-12-2021 | AU | 2021297165 A1 | 02-02-2023 |
| | | | BR | 112022023828 A2 | 03-01-2023 |
| | | | CA | 3182455 A1 | 30-12-2021 |
| | | | CN | 115667419 A | 31-01-2023 |
| | | | EP | 4168497 A1 | 26-04-2023 |
| | | | KR | 20230024913 A | 21-02-2023 |
| | | | US | 2023174801 A1 | 08-06-2023 |
| | | | WO | 2021262590 A1 | 30-12-2021 |
| WO 2014097309 | A1 | 26-06-2014 | NONE | | |
| WO 2024077328 | A1 | 18-04-2024 | NONE | | |
| WO 2020144360 | A1 | 16-07-2020 | BR | 112021013496 A2 | 14-09-2021 |
| | | | CN | 113302247 A | 24-08-2021 |
| | | | EP | 3908638 A1 | 17-11-2021 |
| | | | JP | 7336526 B2 | 31-08-2023 |
| | | | JP | 2022516993 A | 03-03-2022 |
| | | | KR | 20210110706 A | 08-09-2021 |
| | | | TW | 202035583 A | 01-10-2020 |
| | | | US | 2021332252 A1 | 28-10-2021 |
| | | | WO | 2020144360 A1 | 16-07-2020 |

EPO FORM P0459

For more details about this annex : see Official Journal of the European Patent Office, No. 12/82